# EUROPEAN PATENT SPECIFICATION

(11) **EP 3 912 899 B1**
(45) Date of publication and mention of the grant of the patent: **05.04.2023**
(21) Application number: 20217573.3
(22) Date of filing: 29.12.2020
(51) Int. Cl.: B63B 49/00, B63C 11/48, G01S 7/521

(54) **DEVICE FOR SUPPORTING A SEABED MEASUREMENT UNDERWATER SYSTEM**
VORRICHTUNG ZUR UNTERSTÜTZUNG EINER SEABED-MESSUNG UNTERWASSERSYSTEM
DISPOSITIF DE SUPPORT D'UN SYSTÈME SOUS-MARIN DE MESURE SOUS-MARIN

(30) Priority: 19.05.2020 PT 2020116401
(43) Date of publication of application: 24.11.2021
(73) Proprietor: Universidade de Évora, 7000-803 Évora (PT)
(72) Inventor: RIBEIRO, Carlos, 7005-621 ÉVORA (PT); TERRINHA, PEDRO, 2705-602 SÃO JOÃO DAS LAMPAS (PT); BRITO, PEDRO, 2695-479 LOURES (PT); ROSA, MARCOS, 8800-201 TAVIRA (PT); GONÇALVES, JOÃO, 2900-245 SETÚBAL (PT)

(56) References cited:
- US-A1- 2012 176 867
- US-B1- 7 036 451
- US-B1- 9 505 474

## Description

### TECHNICAL FIELD

The present invention relates to a device for supporting a seabed measurement with sea underwater system on ships.

This device comprises a payload support with at least four docking areas distributed from front edge to rear edge of the payload support, wherein the first docking area comprises a multibeam sonar, the second docking area comprises an inertial measurement unit, and the fourth docking area comprises a sub-bottom profiler.

Therefore, the present invention relates to the area of measurement systems with sensors useful for marine seabed surveying and mapping.

### BACKGROUND

Two types of systems can be used for surveying the seabed. Depending on the objectives and the available vessel, permanent or temporary equipment can be used. When dealing with temporary operational settings, the equipment is frequently mounted on poles located on the side of the ship or on moon poles, such as an opening through the vessel hull.

Mounting more than one probe on the sides of the ship raises several types of problems: in poles located on both sides of the vessel problems arise during the always critical deploy operations and/or the docking manoeuvres; mounting probes on just one side of the vessel also raises problems of hydrodynamic interference between the systems.

These problems are aggravated in small vessels where winches are usually available on only one side and where the space available for poles installation is limited. Usually is a good practice to install lateral poles only in the forward third of the vessel, to avoid propeller and wake hydrodynamic and acoustic disturbances.

Several apparatuses exist for the installation of different kinds of surveying devices, but a system specifically designed for the simultaneous installation of a multibeam echosounder and a parametric sub-bottom profiler on a single pole, without the mutual hydrodynamic interference of both probes does not exist.

In the state of the art there are several documents of structures designed to support underwater sensors.

Document CN207515779U describes multi-sensor installation method for island reef and beach surveying, where one sensor is placed underwater and other on a ship side pole top end. Although this invention addresses the issue of installing two sensors in a single pole, the placement of one of the sensors underwater and the other outside the water does not resolve the hydraulic interference of the present proposal. Also, the need of having different kinds of information for the same position on the seafloor is not solved by this invention since it is planned to perform underwater and subaerial mapping.

A system for sounding the sea by multibeam is described in the document KR101098514B1. Specifically, the document refers to the installation of a second ship (son ship) with a positioning system to improve the quality of the data. This system addresses particularly the problem of retrieving accurate positioning data.

Document CN107554694A discloses an underwater three-dimensional terrain detection system of unmanned water vessel, where a mounting system similar to a ship pole is described. The system is built to enclose a single sensor and correspond to the complete set of components to function on an unmanned vessel. The system was not designed to be used with more than one probe.

Document WO2017216298A1 refers to an apparatus comprising an equipment pod mounted on a ship pole. The apparatus is built to allow an easier operation during deploying from the vessel and does not include the possibility of deploying a multi-beam and a parametric sensor simultaneously.

Document US3452327A also describes an apparatus for supporting a marine seismic transducer from an operating vessel so that it operates at a predetermined water depth. However, the apparatus consists of a hollow, elongated stiff-leg member which is mounted from a swivel off the ship's quarter and trails downward to support the seismic transducer at a preselected point in the water. The apparatus is designed to support a single unique sensor, thus not able to support more sensors.

Document US10079010B1 discloses a system for mounting, positioning, and deployment of the sonar head of a sonar survey. The purpose of this system is to facilitate the positioning of a sonar sensor on a pole outside the hull. It is designed for a single probe.

US 7 036 451 B1 discloses the preamble of claim 1.

Regarding commercial ship pole solutions, it is known several like as 2040 Portable Hydrographic System (PHS) but like documents above referenced none of these solutions has an option for multiple sensor mounting.

The temporary installation of sensors for geophysical surveys in vessels pose several problems, specially of hydrodynamic interference between the different sensors. These problems can be easily solved by proceeding to the installation of the sensors in different sides of the hull. However, the conditions for the linkage of two poles on each side of the ship's hull are tricky and there are big advantages to install the sensors only in one side of the ship, in a single pole, that imply a single set of operations for the deploy and the recovery of the equipment.

The installation of more than one equipment in a single pole, is challenging since the sensor installed in the front increases the turbulence and influence the data acquisition of the sensor placed in the back.

The present invention proposes to overcome the prior art problems by settling a fixation support to install a multibeam sensor and a parametric sub-bottom profiler sensor simultaneously without a negative turbulence interference. Besides, this solution is more cost effective, simpler and has no negative environmental impact.

### SUMMARY

The present invention relates to a device for supporting a seabed measurement with sea underwater system on ships. This device comprises a payload support with at least four docking areas distributed from front edge to rear edge of the payload support, wherein the first docking area comprises a multibeam sonar, the second docking area comprises an inertial measurement unit, and the fourth docking area comprises a sub-bottom profiler.

When installing two sensors for marine surveying in a ship-pole, problems arise due to the hydrodynamic interference of both sensors that degrade de quality of the data. Since the installation of the sensors in opposing sides of the hull is not always possible, and implies the doubling of deploy and recovery manoeuvres, a solution for installing both sensors on a single pole is preferable.

However, a solution for installation in a single pole must consider the fixation issues and resolve the problem of the interference of both sensors.

The main technical effect of the device herein proposed is that it allows to mount the two more sensors in marine surveys, such as a multibeam echosounder and sub-bottom profiler, on a single pole, with a single deploy operation, without the disadvantages of both systems interference.

For this purpose, a fixation support is specifically designed to allow the installation in a vessel single side pole or moon pool of: i) the sensors required by a standard multibeam system (sound velocity probe and the projector and receiver transducers) used to image seabed morphology; ii) the transducers array of a sub bottom profiler system (e.g. parametric echosounder) used to image sub bottom sediment architecture; and iii) an inertial measurements unit, required for the correct positioning of both systems data.

The proposed device also considers the transducers dimensions and weights of commonly used multibeam and parametric echosounders.

Therefore, the potential problem of signal degradation caused by the sensors hydrodynamic interferences is solved by adopting a two-level sensors placement. Along track sensor separation was adjusted to locate the rear deeper sensor out of the turbulence cone of the front upper sensor, while keeping the overall length of the structure short enough to maintain its stability.

The advantages of the present device can be summarized as follows:
i) possibility of using simultaneously a multibeam and sub-bottom profiler in vessels that cannot accommodate two poles,
ii) reduction of the time and costs of deploy and recovery operations,
iii) accuracy of the data due to the absence of hydrodynamic interference between the two sensors,
iv) and iv) reduction on the errors associated to the exact placement of the sensors in respect to the inertial measurement-unit.

### BRIEF DESCRIPTION OF THE DRAWINGS

**Figure 1****:** Schematic representation of an embodiment of the device comprising one view of the fixation support (Fig. 1(a)) and another view of the support fixed to a pole comprising the multibeam echosounder and the sub-bottom profile (Fig. 1(b)), having a mounting pole (1), two mounting pole-clamps (2), a position and orientation system (3), a support rod (4), a payload support (5), a rod fitting (6), one pinger-pole (7), a multibeam echosounder (8), a parametric sub-bottom profiler (9) and an IMU (inertial measurement unit) plate adapter (19).

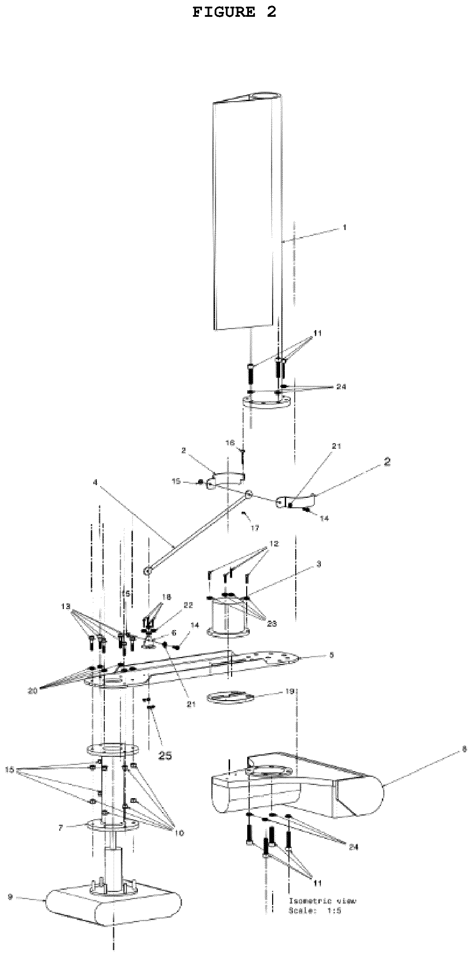

**Figure 2****:** Schematic representation of an exploded perspective of a preferred embodiment of the fixation support of the device, wherein the fixation is supporting the multibeam echosounder and the parametric sub-bottom profiler with a mounting pole (1), two mounting pole clamp (2), a position and orientation system - inertial measurements unit (IMU) (3), a support rod (4), a payload support (5), a rod fitting (6), a pinger-pole (7), a multibeam echosounder (8), a parametric sub-bottom profiler (9), a plurality of flanged nuts (10,25), a plurality of low profile socket head screws (11), a plurality of socket head screws (12,13, 14, 18) , flanged nut (15), a shoulder screw (16) to use with a nut (17) an IMU plate adapter (19), a plurality of washers (20, 21, 22, 23, 24).
**Figures 3**.1-3.2-3.3: Schematic representation of an embodiment of the payload support.
**Figure 4****:** Schematic representation of an embodiment of the parametric echosounder (pinger) pole support.
**Figure 5****:** Schematic representation of an embodiment of the support rod used to stabilize the parametric echosounder support section.
**Figure 6****:** Schematic representation of an embodiment of the mounting pole clamp.
**Figure 7****:** Schematic representation of an embodiment of the rod fitting.

### DESCRIPTION

The present invention relates to a device for supporting a seabed measurement with sea underwater system on ships. This device comprises a payload support with at least four docking areas distributed from front edge to rear edge of the payload support, wherein the first docking area comprises a multibeam sonar, the second docking area comprises an inertial measurement unit, and the fourth docking area comprises a sub-bottom profiler.

The payload support (5) has at least four docking areas, with perforations for connection of the device with the ship pole, for installation of the multibeam and parametric echosounder sensors and installation of the inertial unit, a hollow cylindrical piece corresponding to the pinger pole intended to connect the parametric echosounder to the payload support, a support rod connecting the payload support to the ship's pole with the purpose of stabilizing all the system and reduce the strain during operations, two mounting pole clamps for the union of the ship pole and support rod; a rod fitting for the connection of the support rod to the payload support.

The docking areas distributed from front edge to rear edge of the payload support, wherein:
- a first docking area comprises a first central hole surrounded by means for fastening a mounting pole on top and fastening a multibeam sonar on the bottom of said hole,
- a second docking area comprises a rip and means for fastening an inertial measurement unit,
- a third docking area comprises means for docking a support rod for diagonal bracing between the mounting pole and the payload support, and
- a fourth docking area comprises a second central hole surrounded by means for fastening a pinger pole to the second central hole for fastening with a sub-bottom profiler.

A device having the above-mentioned set of components, an installation with the two sensors and the inertial unit in a single pole is possible, and the hydrodynamic interference of both sensors as well as the excess stress on the ship's pole and the payload support is prevented.

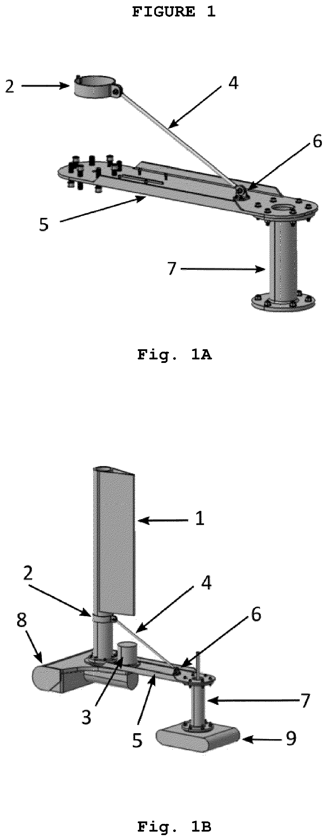

**Figure 1** shows a schematic representation of a preferred embodiment of the device of the invention, showing the main components as described above: a mounting pole (1), two mounting pole-clamps (2), a position and orientation system (3), a support rod (4), a payload support (5), a rod fitting (6), one pinger-pole (7), a multibeam echosounder (8), a parametric sub-bottom profiler (9) and an IMU (inertial measurement unit) plate adapter (19).

**Figure 2** shows a schematic representation of an embodiment of the device supporting the multibeam echosounder and the parametric sub-bottom profiler with a mounting pole (1), two mounting pole clamp (2), a position and orientation system - inertial measurements unit (IMU) (3), a support rod (4), a payload support (5), a rod fitting (6), a pinger pole (7), a multibeam echosounder (8), a parametric sub-bottom profiler (9), a plurality of flanged nuts (10,25), a plurality of low profile socket head screws (11), a plurality of socket head screws (12,13, 14, 18) , flanged nut (15), a shoulder screw (16) to use with a nut (17) an IMU plate adapter (19), a plurality of washers (20, 21, 22, 23, 24).

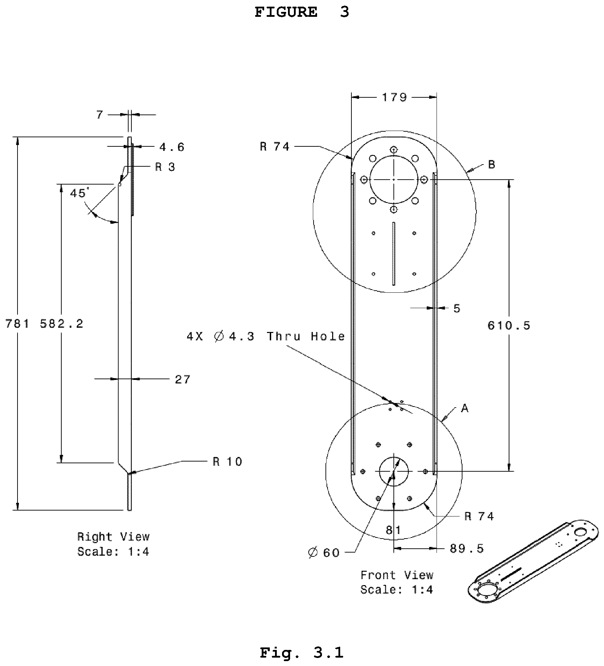

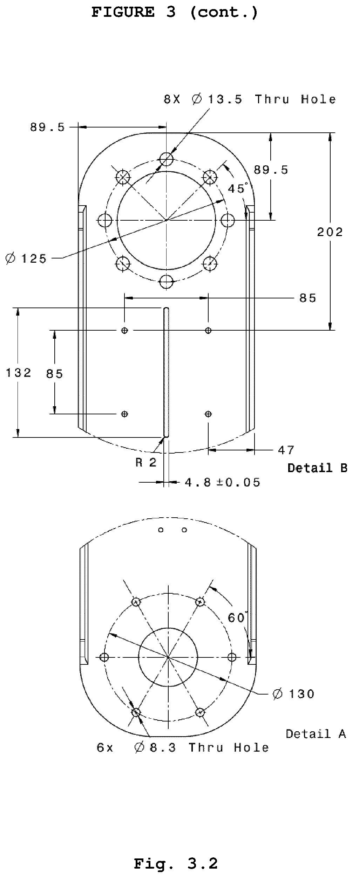

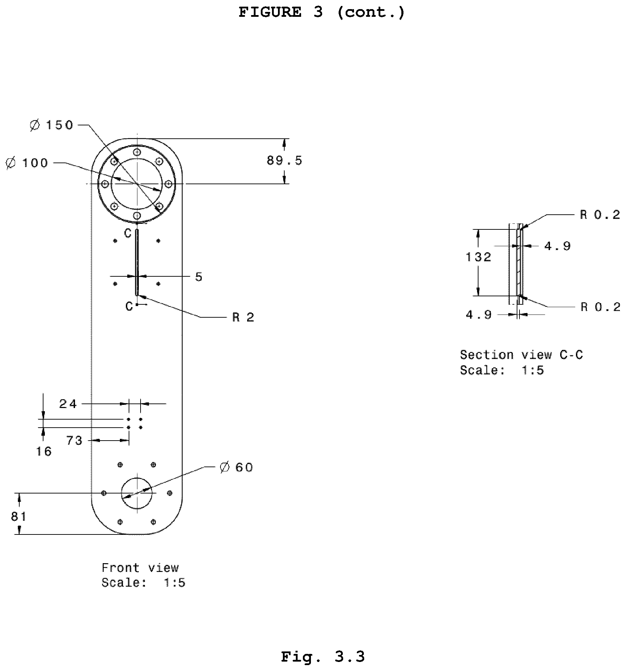

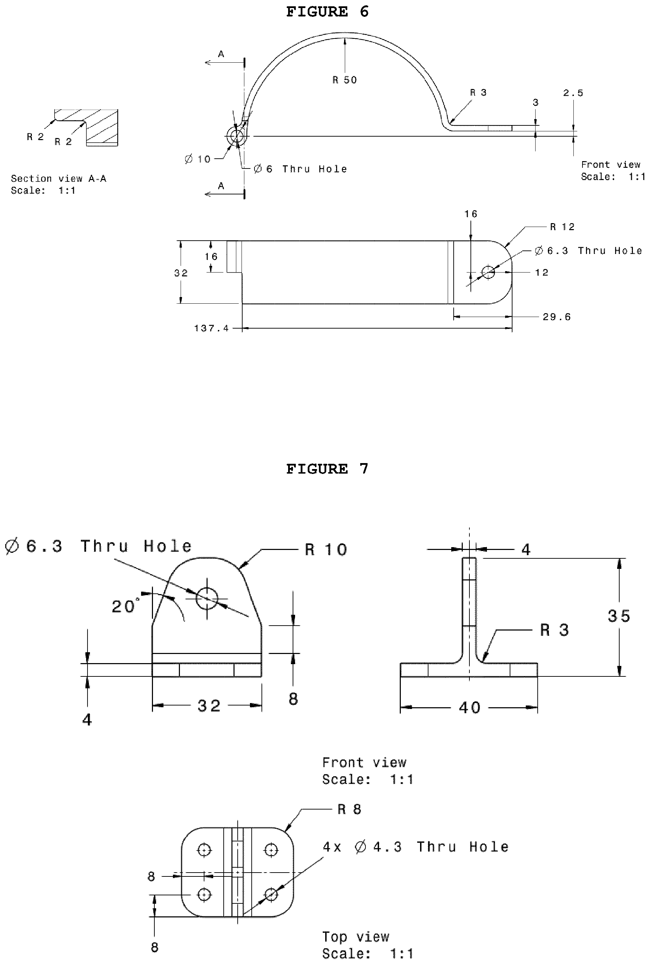

Details on the preferred dimensions and docking of the components are presented in the schematics of figures 3 to 7.

In a preferred embodiment, the first central hole has a diameter of at least 100 mm.

In another preferred embodiment, the second central hole has a diameter of at least 60 mm.

In another preferred embodiment, perforations surrounding the first central hole are at least 8, spaced 45° from each other and having a diameter preferably of 13.5 mm.

In another embodiment, the perforations surrounding the second hole are at least 6 and spaced 60° from each other and having a diameter of 8.3 mm.

In another embodiment, the connection of the mounting pole with a support rod is made by a mounting pole-clamps.

In another embodiment, the support rod is a body with two ends being one end connected with the rod fitting and the other one connected with the mounting pole clamps.

In another embodiment, the fastening of the multibeam in the device is made by low profile socked head screw.

In another embodiment, the multibeam sonar is an ultra-high resolution multibeam echosounder. The ultra-high resolution multibeam echosounder may be a Teledyne ultra-high resolution multibeam echosounder.

In another embodiment, the pinger-pole is a cylindrical hollow piece.

In another embodiment, the sub-bottom profiler is arranged to be inserted into the pinger-pole with its cable passing through the second central hole.

In another embodiment, the sub-bottom profiler is connected to the device through socked head screws.

In another embodiment, the sub-bottom profiler is a narrow-beam parametric sub-bottom profiler.

In another embodiment, the device is mounted with its length parallel to a vessel longer axis.

In another embodiment, the device is mounted at a 90 degrees angle of a vessel.

The device of the present invention enables uneven placement of the two measuring sensors of a multibeam echosounder and a sub-bottom profiler, developed for lateral coupling to ship's hull through a pre-existing pole. In particular, the present invention allows simultaneous placement of two sensors in a single anchor point of the ship, facilitating the entire operation of data acquisition and deploying/recovering, ensuring the reliability and non-interference of both equipments during the survey.

The present invention may comprise to a fixation bracket designed to include the sensors of a multibeam echosounder and a parametric echosounder mounted on a single side pole or moon pole.

In an embodiment, the system includes at least five main components specifically designed to allow the installation of two sensors, operating simultaneously without interfering hydrodynamically and without imposed excessive stress to the pole. The dimensioning of the system was done after stress and hydrodynamic numerical modelling.

In a preferred embodiment, the multibeam echosounder (8) is an ultra-high resolution multibeam echosounder.

In a preferred embodiment, parametric sub-bottom profiler (9) is a narrow- beam parametric sub-bottom profiler.

In a preferred embodiment, the flanged nuts are preferably M8, M6 and M4. Particularly, twelve flanged nuts are M8 (10), two are M6 (15) and four are M4 (25).

In a preferred embodiment there are eight low profile socket head screws (11).

In a preferred embodiment, the plurality of socket head screws are: four M5x22 (12), six are M8x35 (13), two are M6x20 (14) and four are M4x20 (18).

In a preferred embodiment the shoulder screw (16) is a M6x30.

In a preferred embodiment the Nut (17) is a M5.

In a preferred embodiment the plurality of washers preferably comprise twenty four washers, more preferably six of them are M8 (20), two of them are M6 (21), four of them are M4 (22), four of them are M5 (23) and eight of them are M12(24).

In a preferred embodiment, the flanged nuts (10, 15, 25), the low-profile socket head screw (11), the socket heads screws (12, 13, 14, 18), the shoulder screw (16), the nut (17) and the washers (20, 21, 22, 23, 24) are made of stainless steel.

In a preferred embodiment, the flanged nuts (10, 15, 25), the low-profile socket head screw (11), the socket heads screws (12, 13, 14, 18), the nut (17) and the washers (20, 21, 22, 23, 24) are made of stainless steel A4.

In a preferred embodiment, the shoulder screw (16) is made of stainless steel A2.

Figure 3 shows a schematic representation of an embodiment of the payload support where it is presented a preferred embodiment of the dimensions related with the holes and perforations and the rip that the payload support comprises.

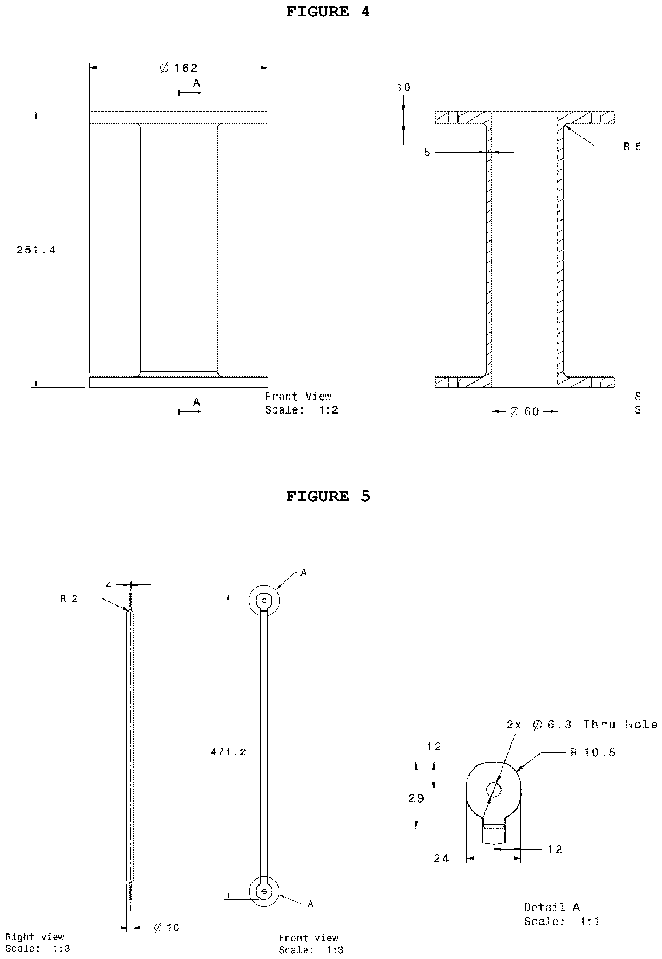

Figures 4, 5, 6 and 7 show all the preferable dimensions that the present disclosure may comprise.

It is also disclosed a multibeam and pinger transducers fixation bracket to attach to a ship pole comprising: a payload support (5), a pinger-pole (7), a support rod (4), a mounting pole clamp (2) and a rod fitting (6).

In an embodiment, the payload support (5) may have a rectangular format, in which all elements of the apparatus will be attached. The payload support (5) may be mounted with its length parallel to the vessel longer axis.

In another embodiment, alternatively the mounting of the device can be at a 90 degrees angle, but has the following disadvantages:
i) overall poor hydrodynamic performance, which implies greater pole strain,
ii) exposure of the inertial unit and respective cable, that in the preferred option are both protected behind the pole, and
iii) sub-bottom transducer with a larger departure from the vessel, that increases the risks to the unit during manoeuvring and operation, such as for e.g., cables or fishing gear entanglement risk.

In an embodiment the payload support (5) is provided with at least four docking areas from front edge to rear edge. Specifically, one first docking area is provided with a set of perforations for the ship pole on top and from the multibeam underneath, followed by the second zone provided with a set of perforations for the inertial unit, a third zone provided with perforations for docking of a rod fitting (6) and a fourth area provided with perforations and a central hole for fitting the pinger pole (7).

In an embodiment the payload support (5) has on its larger dimension, a reinforcement located laterally in about 70% of its length.

In an embodiment, a pinger-pole (7) may be a hollow cylindrical piece, with perforations for docking on the payload support (5) and docking of a parametric echosounder or another sub-bottom transducer.

In another embodiment, the total length may equal the distance between the pinger frontal edge, and the vertical define by multibeam rear edge.

In another embodiment, the support rod (4) is a body with two ends with perforations for docking in the rod fitting (6) and the ship pole.

In another embodiment, the invention comprises two mounting pole clamps (2) for union at the ship pole and support rod (4) .

In another embodiment, the rod fitting (6) may comprise a support with perforations for the connection between this component and payload support (5), and to support rod (4).

The above-described embodiments can be present in combination to define different alternatives of the device of the invention.

## Claims

1. A device for supporting a seabed measurement underwater system on ships **characterized by** comprising a payload support (5) having at least four docking areas distributed from front edge to rear edge of the payload support wherein:
- the first docking area comprises a first central hole surrounded by means for fastening a mounting pole (1) on top and fastening a multibeam sonar (8) on the bottom of said hole,
- the second docking area comprises a rip and means for fastening an inertial measurement unit (3),
- the third docking area comprises means for docking a support rod (4) for diagonal bracing between the mounting pole and the payload support (5), and
- the fourth docking area comprises a second central hole surrounded by means for fastening a pinger-pole (7) to the second central hole for fastening with a sub- bottom profiler (9).

2. A device according to claim 1 **characterized by** the first central hole having a diameter of at least 100 mm.

3. A device, according to claim 1 **characterized by** the second central hole having a diameter of at least 60 mm.

4. A device, according to claim 1 **characterized by** the perforations surrounding the first central hole being at least 8, spaced 45° from each other and having a diameter preferably of 13.5 mm.

5. A device, according to claim 1 **characterized by** the perforations surrounding the second hole being at least 6 and spaced 60° from each other and having a diameter of 8.3 mm.

6. A device, according to claim 1 **characterized by** the connection of the mounting pole with a support rod (4) being made by a mounting pole clamp.

7. A device, according to claim 1 **characterized by** the support rod (4) being a body with two ends being one end connected with the rod fitting and the other one connected with the mounting pole clamp (2).

8. A device, according to claim 1 **characterized by** the fastening of the multibeam (8) in the device being made by low profile socket head screw (11).

9. A device, according to claim 1 **characterized by** the multibeam sonar (8) being an ultra-high resolution multibeam echosounder.

10. A device, according to claim 1 **characterized by** the pinger-pole (7) being a cylindrical hollow piece.

11. A device, according to claim 1 **characterized by** the sub-bottom profiler (9) being arranged to be inserted into the pinger-pole (7) with its cable passing through the second central hole.

12. A device, according to claim 1 **characterized by** the sub-bottom profiler being connected to the device through socket head screws (13).

13. A device, according to claim 1 **characterized by** the sub-bottom profiler (9) being a narrow-beam parametric sub-bottom profiler.

14. A device, according to any of the claims 1 to 13 **characterized by** the device being mounted with its length parallel to a vessel longer axis.

15. A device, according to any of the claims 1 to 13 **characterized by** the device being mounted at a 90 degrees angle of a vessel.

## Patentansprüche

1. Eine Vorrichtung zum Tragen eines Unterwasser-Messsystem für den Meeresboden auf Schiffen, **dadurch gekennzeichnet, dass** sie einen Nutzlast-Unterstützung (5) mit mindestens vier Andockbereichen umfasst, die von der Vorderkante zur Hinterkante des Nutzlast-Unterstützung verteilt sind, wobei:
- der erste Andockbereich umfasst ein erstes zentrales Loch, das von Mitteln zur Befestigung einer Montagestange (1) an der Oberseite und zur Befestigung eines Fächerecholots (8) an der Unterseite des Lochs umgeben ist,
- der zweite Andockbereich umfasst einen Riss und Mittel zur Befestigung einer Trägheitsmesseinheit (3),
- der dritte Andockbereich Mittel zum Andocken einer Stützstab (4) zur diagonalen Verstrebung zwischen dem Montagestange und dem Nutzlast-Unterstützung (5) umfasst, und
- der vierte Andockbereich umfasst ein zweites zentrales Loch, das von Mitteln zur Befestigung eines Pinger-Poles (7) an dem zweiten zentralen Loch zur Befestigung mit einem Sub-Bottom Profiler (9) umgeben ist.

2. Vorrichtung nach Anspruch 1, **dadurch gekennzeichnet, dass** das erste zentrale Loch einen Durchmesser von mindestens 100 mm hat.

3. Vorrichtung nach Anspruch 1, **dadurch gekennzeichnet, dass** das zweite zentrale Loch einen Durchmesser von mindestens 60 mm hat.

4. Vorrichtung nach Anspruch 1, **dadurch gekennzeichnet, dass** die Perforationen, die das erste zentrale Loch umgeben, mindestens 8 sind, in einem Abstand von 45° zueinander angeordnet sind und einen Durchmesser von vorzugsweise 13,5 mm haben.

5. Vorrichtung nach Anspruch 1, **dadurch gekennzeichnet, dass** die Perforationen, die das zweite Loch umgeben, mindestens 6 sind, in einen Abstand von 60° zueinander angeordnet sind und einen Durchmesser von 8,3 mm haben.

6. Vorrichtung nach Anspruch 1, **dadurch gekennzeichnet, dass** die Verbindung der Montagestange mit einem Stützstab (4) durch eine Montagestangen-Klemme erfolgt.

7. Vorrichtung nach Anspruch 1, **dadurch gekennzeichnet, dass** das Stützstab (4) ein Körper mit zwei Enden ist, wobei ein Ende mit dem Stabsbeschlag und das andere Ende mit der Montagestangen-Klemme (2) verbunden ist.

8. Vorrichtung nach Anspruch 1, **dadurch gekennzeichnet, dass** die Befestigung des Fächerecholots (8) in der Vorrichtung durch eine Innensechskantschraube mit niedrigem Profil (11) erfolgt.

9. Vorrichtung nach Anspruch 1, **dadurch gekennzeichnet, dass** das Fächerecholot (8) ein ultrahochauflösendes Fächerecholot ist.

10. Vorrichtung nach Anspruch 1, **dadurch gekennzeichnet, dass** der Pinger-Pol (7) ein zylindrisches Hohlteil ist.

11. Vorrichtung nach Anspruch 1, **dadurch gekennzeichnet, dass** der Sub-Bottom Profiler (9) so angeordnet ist, dass er in den Pinger-Mast (7) eingeführt wird, wobei sein Kabel durch das zweite zentrale Loch verläuft.

12. Vorrichtung nach Anspruch 1, **dadurch gekennzeichnet, dass** der Sub-Bottom Profiler mit der Vorrichtung durch Innensechskantschrauben (13) verbunden ist.

13. Vorrichtung nach Anspruch 1, **dadurch gekennzeichnet, dass** der Sub-Bottom Profiler (9) ein parametrischer Sub-Bottom Profiler mit schmalem Strahl ist.

14. Vorrichtung nach einem der Ansprüche 1 bis 13, **dadurch gekennzeichnet, dass** die Vorrichtung mit ihrer Länge parallel zu einer längeren Achse des Schiffes angebracht ist.

15. Vorrichtung nach einem der Ansprüche 1 bis 13, **dadurch gekennzeichnet, dass** die Vorrichtung in einem Winkel von 90 Grad zu einem Schiff angebracht ist.

## Revendications

1. Dispositif de support d'un système sous-marin de mesure des fonds marins sur des navires **caractérisé en ce qu'**il comprend un support de charge utile (5) ayant au moins quatre zones d'arrimage réparties du bord avant au bord arrière du support de charge utile, dans lequel :
- la première zone d'arrimage comporte un premier trou central entouré de moyens de fixation d'un poteau de montage (1) sur le dessus et de fixation d'un sonar multifaisceaux (8) sur le fond dudit trou,
- la deuxième zone d'arrimage comporte une plaque et des moyens de fixation d'une unité de mesure inertielle (3),
- la troisième zone d'arrimage comporte des moyens d'arrimage d'une tige de support (4) pour entretoisement diagonal entre le poteau de montage et le support de charge utile (5), et
- la quatrième zone d'arrimage comporte un deuxième trou central entouré de moyens de fixation d'un poteau latéral pour une sonde géophysique (7) au deuxième trou central pour fixation avec un profileur de fond (9) .

2. Dispositif selon la revendication 1 **caractérisé en ce que** le premier trou central a un diamètre d'au moins 100 mm.

3. Dispositif selon la revendication 1 **caractérisé en ce que** le deuxième trou central a un diamètre d'au moins 60 mm.

4. Dispositif selon la revendication 1 **caractérisé en ce que** le nombre de perforations entourant le premier trou central est au moins 8, espacées de 45° l'une de l'autre et ayant un diamètre de préférence de 13,5 mm.

5. Dispositif selon la revendication 1 **caractérisé en ce que** le nombre de perforations entourant le deuxième trou est au moins 6, espacées de 60° l'une de l'autre et ayant un diamètre de 8,3 mm.

6. Dispositif selon la revendication 1 **caractérisé en ce que** la liaison du poteau de montage avec une tige de support (4) est réalisée par une pince de poteau de montage.

7. Dispositif selon la revendication 1 **caractérisé en ce que** la tige de support (4) est un corps avec deux extrémités dont l'une est reliée au raccord de la tige et l'autre est reliée à la pince de poteau de montage (2) .

8. Dispositif selon la revendication 1 **caractérisé en ce que** la fixation du sonar multifaisceaux (8) sur le dispositif est réalisée par des vis à tête creuse à profil bas (11).

9. Dispositif selon la revendication 1 **caractérisé en ce que** le sonar multifaisceaux (8) est un échosondeur multifaisceaux à ultra-haute résolution.

10. Dispositif selon la revendication 1 **caractérisé en ce que** le poteau latéral pour une sonde géophysique (7) est une pièce cylindrique creuse.

11. Dispositif selon la revendication 1 **caractérisé en ce que** le profileur de fond (9) est conçu pour être inséré dans le poteau latéral pour une sonde géophysique (7) et pour que son câble passe à travers le deuxième trou central.

12. Dispositif selon la revendication 1 **caractérisé en ce que** le profileur de fond est relié au dispositif par des vis à tête creuse (13).

13. Dispositif selon la revendication 1 **caractérisé en ce que** le profileur de fond (9) est un profileur de fond paramétrique de faisceaux étroits.

14. Dispositif selon l'une quelconque des revendications 1 à 13 **caractérisé en ce que** le dispositif est monté avec sa longueur parallèle à l'axe le plus long d'un navire.

15. Dispositif selon l'une quelconque des revendications 1 à 13 **caractérisé en ce que** le dispositif est monté à un angle de 90 degrés d'un navire.
